# EUROPEAN PATENT APPLICATION

(11) **EP 4 681 956 A1**
(43) Date of publication of application: **21.01.2026**
(21) Application number: 23928858.2
(22) Date of filing: 12.06.2023
(51) Int. Cl.: B60K 35/00, G02B 5/00

(54) **VEHICLE IMAGE-DEVICE HAVING SUNLIGHT-AVOIDANCE STRUCTURE**

(30) Priority: 23.03.2023 KR 20230038038
(71) Applicant: LG ELECTRONICS, INC., Seoul 07336 (KR)
(72) Inventor: KWEON, Ohjin, Seoul 06772 (KR)
(74) Representative: Schornack, Oliver
(86) International application number: PCT/KR2023/008034
(87) International publication number: WO 2024/195934

(57) **Abstract**

This vehicle image-device comprises: an image formation device arranged in an internal region of a vehicle dashboard; and a cover which is arranged on an upper region of the image formation device, and which has a plurality of patterns formed on the inner surface thereof so as to adjust the reflection angle of the sunlight that passes through a windshield. The patterns include: a first region having a surface formed at an inclination angle such that the sunlight is incident thereon; and a second region between adjacent first regions. The sunlight can be reflected from the first region so as to travel outside of the eyeline region of a passenger in a vehicle driver seat or to be absorbed in a light trap portion arranged between the cover and the windshield.

## Description

### Technical Field

This specification relates to a vehicle imaging device (vehicle image-device). More specifically, the specification relates to a vehicle imaging device having a sunlight-avoidance structure.

### Background Art

A vehicle is an apparatus that moves in a direction desired by a user riding therein. A representative example of a vehicle may be an automobile.

For convenience of a user using a vehicle, various types of sensors and electronic devices are arranged in the vehicle. In particular, for the convenience of the user's driving, research on an advanced driver assistance system (ADAS) is being actively carried out. Furthermore, development of an autonomous vehicle is being actively carried out.

In some embodiments, a vehicle display that shows various driving information of the vehicle is located below a driver's forward visual field for driving, which affects driving safety, a phenomenon known as rubbernecking. Therefore, a vehicle imaging device, such as a head-up display (HUD), may be mounted on a vehicle to enhance driving safety by projecting an image on a windshield at the front of the vehicle, positioned close to the driver's line of sight while driving.

An infotainment device also needs to be installed in a passenger or rear seat of the vehicle to provide personal information and personal entertainment content. Therefore, there is a need for a vehicle imaging device that is capable of displaying driving-related information in a front region of a driver's seat of the vehicle or provide personal entertainment content in a front region of a passenger or rear seat of the vehicle.

In some embodiments, while a vehicle imaging device outputs optical signals to a windshield to display images, sunlight of the sun around the vehicle imaging device must be directed to outside of a field of view of an occupant in the vehicle. Therefore, to avoid direct and reflected sunlight, it is necessary to change a path of sunlight to the outside of the occupant's field of view through a reflective structure inside the vehicle. In this regard, the reflective structure inside the vehicle may be implemented in a curved shape, considering the movement path of the sun and the shape of the windshield. However, there is a problem in that this curved reflective structure increases the height of an overall structure.

### Disclosure of Invention

### Technical Problem

One aspect of the specification is to provide a vehicle imaging device (vehicle image-device) having a sunlight-avoidance structure.

Another aspect of the specification is to implement a vehicle imaging device for the purpose of sunlight avoidance with an upper cover of a dashboard of a vehicle, thereby reducing the volume of an overall structure.

Another aspect of the specification is to provide a flat structure for an entire structure by applying a micro pattern to a shape of an upper cover of a vehicle imaging device.

Another aspect of the specification is to secure the degree of freedom in the design of a vehicle imaging device by considering a direction of movement of the sun and a direction of travel of the vehicle.

The tasks to be solved in the present disclosure may not be limited to the aforementioned, and other problems to be solved by the present disclosure will be obviously understood by a person skilled in the art based on the following description.

### Solution to Problem

In order to achieve the aspects and other advantages according to embodiments, there is provided a vehicle imaging device including a picture generation unit (PGU) arranged in an inner region of a dashboard of a vehicle; and a cover arranged in an upper region of the PGU and including a plurality of patterns formed on an inner surface thereof to adjust an angle of reflection of sunlight passing through a windshield. The plurality of patterns may include first regions each having a surface formed at an inclined angle so that sunlight is incident thereon, and second regions each between adjacent first regions. The sunlight may be reflected in the first regions to be directed to outside of an eye box region of a driver seat occupant or to be absorbed into a light trap portion arranged between the cover and the windshield.

In an embodiment, a first surface of the corresponding first region may be implemented as an optical effective surface on which the sunlight is incident and through which light generated in the PGU passes. A second surface of the corresponding second region may be implemented as an optical non-effective surface on which the sunlight and the light are not incident.

In an embodiment, a first length of the first region, in which the sunlight is reflected, in one axial direction may be formed longer than a second length of the second region in the one axial direction. An area of the first surface corresponding to the optical effective surface may be formed wider than an area of the second surface corresponding to the optical non-effective surface.

In an embodiment, a first length of the first region, in which the sunlight is reflected, in one axial direction may be formed longer than a second length of the second region in the one axial direction. An inclination angle of the second region may be formed greater than an inclination angle of the first region.

In an embodiment, inclination angles of the second regions may each be formed parallel to light generated in the PGU to correspond to an angle at which the light passes through the first region.

In an embodiment, the cover may have the inner surface and an outer surface. The plurality of patterns may be formed in one axial direction on at least one of the inner surface and the outer surface of the cover.

In an embodiment, the cover may be arranged to be inclined to correspond to a direction in which the windshield is formed. The cover may be arranged so that one end thereof is located higher than another end. A reference angle at which the inner surface of the cover is inclined with respect to a horizontal plane may be set to a value smaller than a mean curvature of the windshield.

In an embodiment, the vehicle imaging device may further include a light trap portion arranged between the cover and an inner surface of the windshield and configured to absorb sunlight reflected from the first region of the cover.

In an embodiment, the light trap portion may be coupled to one end of the cover and the inner surface of the windshield. The light trap portion may be arranged to be more inclined with respect to a horizontal plane than the cover and the windshield.

In an embodiment, the cover may be formed such that the inner surface has a first structure which is flat in a plane shape or a second structure which is curved. A height of the PGU of the first structure may be lower than a height of a second PGU of the second structure. A height of the light trap portion of the first structure may be lower than a height of a second light trap portion of the second structure.

In an embodiment, the plurality of patterns may be formed in one axial direction on at least one of the inner surface and the outer surface of the cover. The first regions may be formed such that inclination angles thereof change from positive angles to negative angles.

In an embodiment, the first regions may be formed at a first angle and a second angle to an n-1-th angle and an n-th angle. A size of the second angle may be smaller than a size of the first angle. A size of the n-th angle may be greater than a size of the n-1-th angle.

In an embodiment, when the sunlight is steered to a rear region, which is an opposite direction to a direction of travel of the vehicle, the sunlight may be reflected from the first region of the cover and proceeds to a lower region of the eye box region of the driver seat occupant.

In an embodiment, when the sunlight is steered to a front region, which is a direction of travel of the vehicle, the sunlight may be reflected from the first region of the cover and absorbed into the light trap portion.

In an embodiment, the cover may be arranged to be inclined in an opposite direction to a direction in which the windshield is formed. The cover may be arranged such that one end thereof is located lower than another end.

In an embodiment, the light trap portion may be coupled to the another end of the cover and an inner surface of the dashboard. The light trap portion may be arranged to be more inclined with respect to a horizontal plane than the cover and the windshield.

In an embodiment, the first regions may be formed such that inclination angles thereof gradually decrease. The first regions may be formed at a first angle and a second angle to an n-1-th angle and an n-th angle. A size of the second angle may be smaller than a size of the first angle. A size of the n-th angle may be smaller than a size of the n-1-th angle.

In an embodiment, inclination angles of the second regions may each be formed parallel to light generated in the PGU to correspond to an angle of the light.

In an embodiment, when the sunlight is steered to an upper region whose height is at least a threshold on the windshield, the sunlight may be reflected from the first region of the cover and absorbed into the light trap portion.

In an embodiment, the plurality of patterns of the cover may be manufactured by plastic injection, compression molding, or imprinting on a substrate.

Details of other embodiments are included in the detailed description and drawings.

### Advantageous Effects of Invention

The technical effects of a vehicle imaging device having a sunlight-avoidance structure according to the specification will be summarized as follows, but are not limited thereto.

The shape of an upper cover where an image of the imaging device is output can be designed to have a curvature such that reflected sunlight avoids a path directed toward the human eyes to suppress glare to a driver due to sunlight reflection. According to this specification, the problem of an increase in volume of the imaging device due to the curvature of the upper cover can be solved.

According to the specification, the vehicle imaging device for the purpose of sunlight avoidance can be implemented as the upper cover of a dashboard of a vehicle, thereby reducing the volume of an overall structure.

According to the specification, sunlight can be avoided by applying micro-patterns rather than curvature to the upper cover, and the upper cover can be maintained in a flat shape so as to reduce the volume of the imaging device.

According to the specification, a phase range in which sunlight can be received can be reduced by the upper cover with the reduced volume, which can also implement a light trap portion with a small size.

According to the specification, the degree of freedom in the design of the vehicle imaging device can be secured by optimizing the arrangement structure and shapes of the upper cover and the light trap portion, taking into consideration a direction of movement of the sun and a direction of travel of the vehicle.

The effects of the disclosure are not limited to those effects mentioned above, and other effects not mentioned may be clearly understood by those skilled in the art from the description of the appended claims.

### Brief Description of Drawings

FIG. 1 is a view of appearance of a vehicle according to an embodiment.
FIG. 2 is a diagram of the appearance of the vehicle at various angles.
FIGS. 3 and 4 are diagrams of the interior of a vehicle according to an embodiment.
FIG. 5 is a block diagram of a vehicle according to an embodiment.
FIGS. 6A and 6B are diagrams of a vehicle imaging device having a sunlight-avoidance structure according to embodiments.
FIG. 7A is a cross-sectional view of a structure in which a plurality of patterns are formed on a cover of the imaging device of FIG. 6A.
FIG. 7B is a perspective view of a cover with the plurality of patterns of FIG. 7A with an enlarged view of a partial region.
FIG. 8A is a view of a configuration in which a screen of a certain ratio is formed in a specific region of front glass of a vehicle.
FIG. 8B is a view of a structure in which a vehicle imaging device for implementing the screen of the certain ratio of FIG. 8A is arranged inside a dashboard of the vehicle.
FIG. 9 is a view of a structure in which a picture generation unit and internal components of the vehicle imaging device of FIG. 8B are arranged inside a cover.
FIG. 10A is a view of a configuration in which a screen of a certain ratio is formed in a specific region of front glass of a vehicle.
FIG. 10B is a view of a structure in which a vehicle imaging device for implementing the screen of the certain ratio of FIG. 10A is arranged inside the dashboard of the vehicle.
FIGS. 11A and 11B are views of a structure in which a picture generation unit and internal components of the vehicle imaging device of FIG. 10B are arranged inside a cover.
FIG. 12 is a view of a structure in which patterns are formed at different inclination angles on one surface of a cover according to an embodiment.
FIG. 13 is a view of a structure for avoiding backward sunlight.
FIG. 14 is an enlarged view of a structure in which backward sunlight is incident on and reflected from each pattern of an upper cover.
FIG. 15 is a view of a structure for avoiding forward sunlight.
FIG. 16 is an enlarged view of a structure in which forward sunlight is incident on and reflected from each pattern of an upper cover.
FIG. 17 is a view of a vehicle imaging device having a sunlight-avoidance structure in which a cover is inclined in an opposite direction to a direction in which a windshield is formed.
FIG. 18 is a view of a structure of a cover in which an optical effective surface is formed by patterns having different angles.
FIG. 19 is a view of a structure in which sunlight is incident and reflected at different locations in the structures of FIGS. 17 and 18.

### Mode for the Invention

A description will now be given in detail according to one or more embodiments disclosed herein, with reference to the accompanying drawings. For the sake of a brief description with reference to the drawings, the same or like components regardless reference numerals may be assigned the same reference numeral, and a redundant description thereof will be omitted. Suffixes "module" and "unit" used for elements disclosed in the following description are merely intended for easy description of the specification, and each suffix itself is not intended to give any special meaning or function. In describing the embodiments disclosed herein, moreover, the detailed description will be omitted when a specific description for publicly known technologies to which the invention pertains is judged to obscure the gist of the disclosure. Furthermore, the accompanying drawings are provided only for a better understanding of the embodiments disclosed herein, and are not intended to limit the technical ideas disclosed herein. Therefore, it should be understood that the accompanying drawings include all modifications, equivalents, and substitutions within the scope and technical ideas of the disclosure.

The terms including an ordinal number, such as first, second, and the like, may be used to describe various elements, but the elements should not be limited by those terms. The terms are used merely for the purpose of distinguishing one element from another.

It will be understood that when an element is referred to as being "connected with" another element, the element may be connected with the another element or intervening elements may also be present. In contrast, when a component is referred to as being "directly connected to" or "directly coupled to" another component, it should be understood that there are no intervening components present.

As used herein, the singular form is intended to include the plural forms as well, unless context clearly indicates otherwise.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle according to an embodiment may be understood as a conception including cars, motorcycles, and the like. Hereinafter, the vehicle will be described based on a car.

The vehicle may include any of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

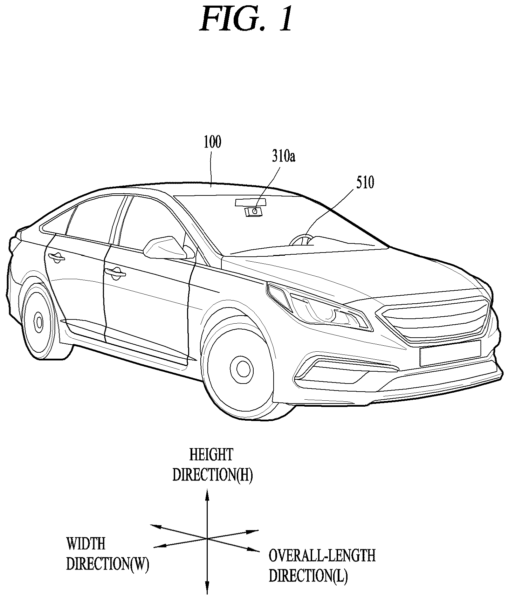

FIG. 1 is a view of appearance of a vehicle according to an embodiment.

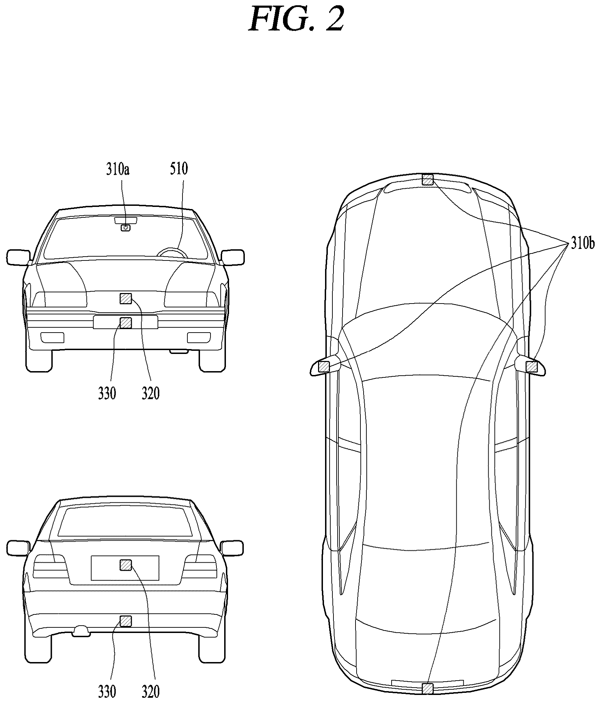

FIG. 2 is a diagram of the appearance of the vehicle at various angles.

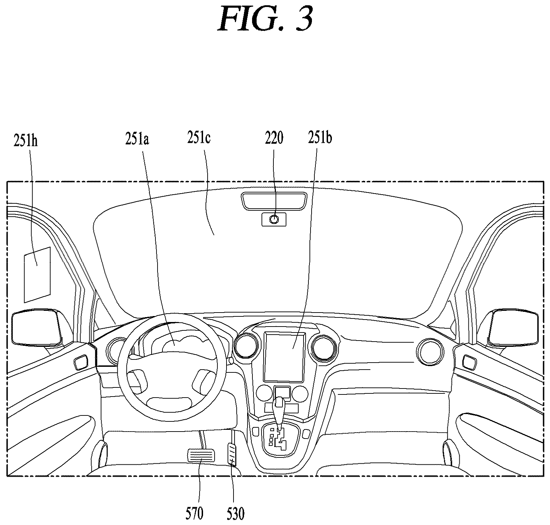

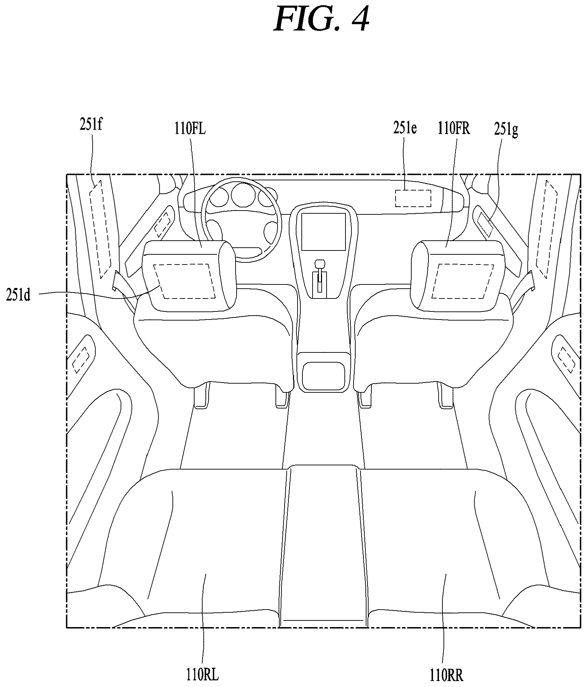

FIGS. 3 and 4 are diagrams of the interior of a vehicle according to an embodiment.

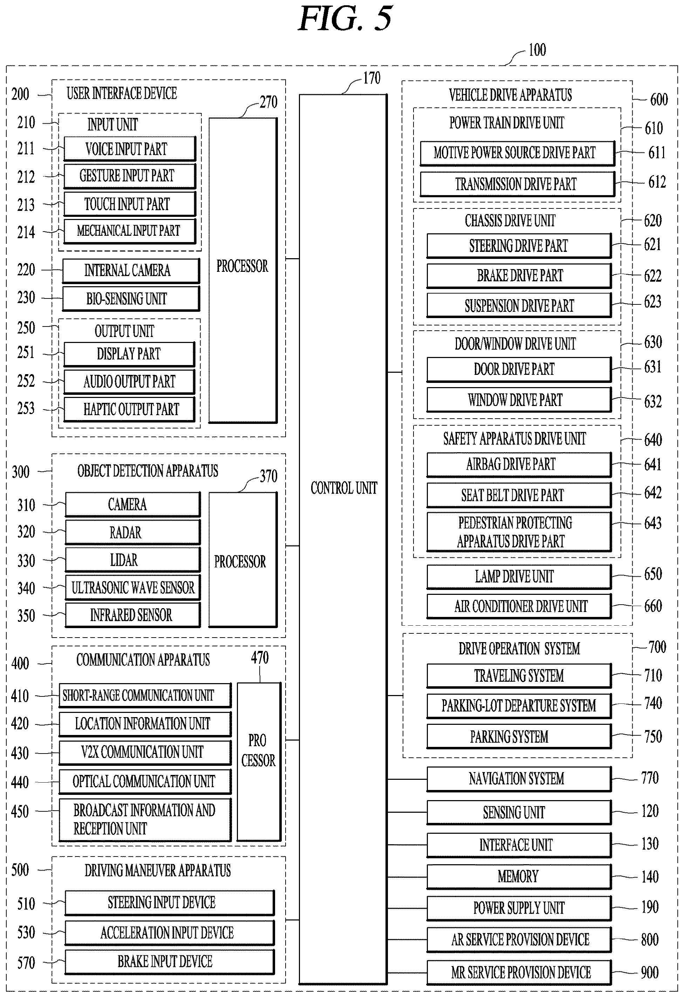

FIG. 5 is a block diagram of a vehicle according to an embodiment.

As illustrated in FIGS. 1 to 5, a vehicle 100 may include wheels rotating by a power source, and a steering input apparatus 510 for adjusting a driving (ongoing, moving) direction of the vehicle 100.

The vehicle 100 may be an autonomous vehicle.

The vehicle 100 may be switched into an autonomous mode or a manual mode based on a user input.

For example, the vehicle 100 may be converted from the manual mode into the autonomous mode or from the autonomous mode into the manual mode based on a user input received through a user interface device 200.

The vehicle 100 may be switched into the autonomous mode or the manual mode based on traveling situation information. The driving environment information may be generated based on object information provided from an object detection device 300.

For example, the vehicle 100 may be switched from the manual mode into the autonomous mode or from the autonomous module into the manual mode based on driving environment information generated in the object detection device 300.

In an example, the vehicle 100 may be switched from the manual mode into the autonomous mode or from the autonomous mode into the manual mode based on driving environment information received through a communication device 400.

The vehicle 100 may switch from the manual mode into the autonomous mode or from the autonomous module into the manual mode based on information, data, or signal provided by an external device.

When the vehicle 100 is driven in the autonomous mode, the vehicle 100 may be driven based on a driving system 700.

For example, the autonomous vehicle 100 may be driven based on information, data, or signals that are generated by a traveling system 710, a parking-lot departure system 740, and a parking system 750.

When the vehicle 100 is driven in the manual mode, the autonomous vehicle 100 may receive a user input for driving through a driving operation device 500. The vehicle 100 may be driven based on the user input received through the driving operation device 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100

As illustrated in FIG. 5, the vehicle 100 may include a user interface device 200, an object detection device 300, a communication device 400, a driving operation device 500, a vehicle drive device 600, a driving system 700, a navigation system 770, a sensing unit 120, an interface unit 130, a memory 140, a controller 170, and a power supply unit 190.

According to embodiments, the vehicle 100 may include more components in addition to components described herein or may not include some of those components described herein.

The user interface device 200 is a device for communication between the vehicle 100 and a user. The user interface device 200 may receive a user input and provide information generated in the vehicle 100 to the user. The vehicle 200 may implement user interfaces (Uls) or user experiences (UXs) through the user interface device 200.

The user interface device 200 may include an input unit 210, an internal camera 220, a biometric sensing unit 230, an output unit 250 and a processor 270.

In some embodiments, the user interface device 200 may include more components in addition to components to be explained in this specification or may not include some of those components to be explained in this specification.

The input unit 200 may allow the user to input information. Data collected in the input unit 120 may be analyzed by the processor 270 and processed as a user's control command.

The input unit 200 may be arranged inside the vehicle. The input unit 200 may be disposed inside the vehicle. For example, the input unit 200 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 200 may include a voice input part 211, a gesture input part 212, a touch input part 213, and a mechanical input part 214.

The audio input part 211 may convert a user's voice input into an electric signal. The converted electric signal may be provided to the processor 270 or the controller 170.

The voice input part 211 may include at least one microphone.

The gesture input part 212 may convert a user's gesture input into an electric signal. The converted electric signal may be provided to the processor 270 or the controller 170.

The gesture input part 212 may include at least one of an infrared sensor and an image sensor, each of which is for detecting a user's gesture input.

According to embodiments, the gesture input part 212 may detect a user's three-dimensional (3D) gesture input. To this end, the gesture input part 212 may include a light emitting diode emitting a plurality of infrared rays, or a plurality of image sensors.

The gesture input part 212 may detect the user's 3D gesture input by a time of flight (TOF) method, a structured light method or a disparity method.

The touch input part 213 may convert the user's touch input into an electric signal. The converted electric signal may be provided to the processor 270 or the controller 170

The touch input part 213 may include a touch sensor for detecting the user's touch input.

According to an embodiment, the touch input part 213 may be integrated with the display 251 so as to implement a touch screen. The touch screen may provide an input interface and an output interface between the vehicle 100 and the user.

The mechanical input part 214 may include at least one of a button, a dome switch, a jog wheel, and a jog switch. An electric signal generated by the mechanical input part 214 may be provided to the processor 270 or the controller 170.

The mechanical input part 214 may be arranged on a steering wheel, a center fascia, a center console, a cockpit module, a door, and the like.

The internal camera 220 may acquire an image of the interior of the vehicle. The processor 270 may detect a user's status from the image of the interior of the vehicle. The processor 270 may acquire information related to the user's gaze from the image of the interior of the vehicle. The processor 270 may detect the user's gesture from the image of the interior of the vehicle.

The biometric detection unit 230 may acquire the user's biometric information. The biometric detection unit 230 may include a sensor for detecting the user's biometric information and acquire fingerprint information and heart rate information regarding the user using the sensor. The biometric information may be used for user authentication.

The output unit 250 may generate an output related to a visual, auditory or tactile signal.

The output unit 250 may include at least one of a display 251, an audio output part 252, and a haptic output part 253.

The display 251 may output graphic objects corresponding to various types of information.

The display 251 may include at least one of a liquid crystal display (LCD), a thin film transistor-liquid crystal display (TFT-LCD), an organic light-emitting diode (OLED), a flexible display, a 3-dimensional (3D) display, and an e-ink display.

The display 251 may be inter-layered or integrated with a touch input part 213 to implement a touch screen.

The display 251 may be implemented as a head up display (HUD), a center information display (CID), a cluster, and/or a rear seat entertainment (RSE). When the display 251 is implemented as the HUD, the display 251 may be provided with a projection module and thus output information through an image which is projected onto a windshield or a window.

The display 251 may include a transparent display. The transparent display may be attached to the windshield or the window.

The transparent display may have a predetermined degree of transparency and output a predetermined screen thereon. The transparent display may include at least one of a thin film electroluminescent (TFEL), a transparent organic light-emitting diode (OLED), a transparent liquid crystal display (LCD), a transmissive transparent display, or a transparent LED display. The transparent display may have adjustable transparency.

In some examples, the user interface device 200 may include a plurality of displays 251a to 251g.

The display 251 may be disposed on one region of the steering wheel, one region 251a, 251b, 251e of the instrument panel, one region 251d of the seat, one region 251f of each pillar, one region 251g of the door, one region of the center console, one region of the headlining, or one region of the sun visor, or implemented on one region 251c of the windshield or one region 251h of the window.

Driving-related information for a driver may be displayed in one region 251a, 251b of the instrument panel. A personal infotainment display may be implemented in one region 251e of the instrument panel by a vehicle imaging device for a passenger seated in a front passenger seat. A personal infotainment display may be implemented in one region 251d of the seat by a vehicle imaging device for rear seat entertainment (RSE).

The audio output part 252 may convert an electric signal provided by the processor 270 or the controller 170 into an audio signal and output the audio signal. To this end, the audio output part 252 may include at least one speaker.

The haptic output part 253 may generate a tactile output. For example, the haptic output part 253 may vibrate the steering wheel, a safety belt, a seat 110FL, 110FR, 110RL, 110RR such that the user can recognize such output.

The processor 270 may control an overall operation of each unit of the user interface device 200.

According to an embodiment, the user interface device 200 may include a plurality of processors 270 or may not include any processor 270.

When the processor 270 is not included in the user interface device 200, the user interface device 200 may operate according to a control of a processor of another device within the vehicle 100 or the controller 170.

In some examples, the user interface device 200 may be called as a display device for vehicle.

The user interface device 200 may operate under the control of the controller 170.

The object detection device 300 is a device for detecting an object located outside the vehicle 100.

Examples of the object may include a variety of objects associated with driving (operation) of the vehicle 100.

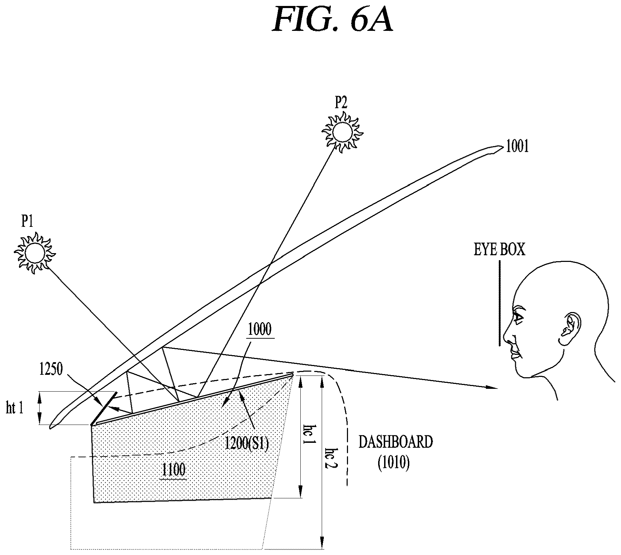

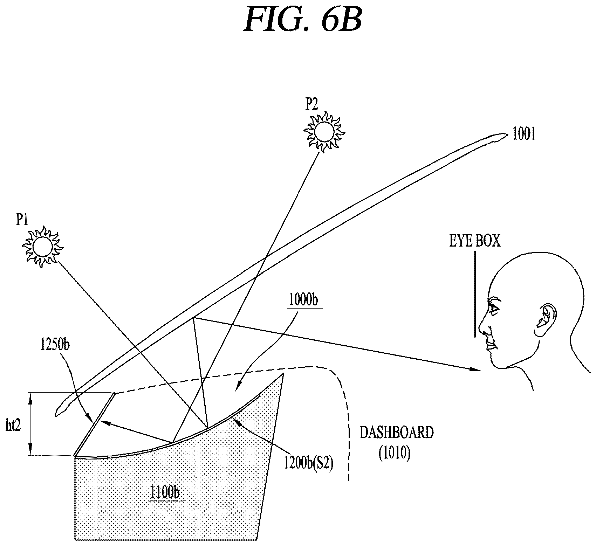

Hereinafter, a vehicle imaging device according to the specification, particularly, a sunlight-avoidance structure of the vehicle imaging device, will be described. In this regard, FIGS. 6A and 6B are diagrams of a vehicle imaging device having a sunlight-avoidance structure according to embodiments.

While the vehicle imaging device outputs optical signals for displaying images to a windshield, sunlight of the sun around the vehicle imaging device must be directed to outside of a field of view of an occupant in the vehicle. Therefore, to avoid direct and reflected sunlight, it is necessary to change a path of sunlight to the outside of the occupant's field of view through a reflective structure inside the vehicle. In this regard, the reflective structure inside the vehicle may be implemented in a curved shape, considering the movement path of the sun and the shape of the windshield. However, there is a problem in that this curved reflective structure increases the height of an overall structure.

One aspect of the specification is to provide a vehicle imaging device (vehicle image-device) having a sunlight-avoidance structure. Another aspect of the specification is to implement a vehicle imaging device for the purpose of sunlight avoidance with an upper cover of a dashboard of a vehicle, thereby reducing the volume of an overall structure. Another aspect of the specification is to provide a flat structure for an entire structure by applying a micro pattern to a shape of an upper cover of a vehicle imaging device. Another aspect of the specification is to secure degree of freedom in the design of a vehicle imaging device by considering a direction of movement of the sun and a direction of travel of the vehicle. The tasks to be solved in the present disclosure may not be limited to the aforementioned, and other problems to be solved by the present disclosure will be obviously understood by a person skilled in the art based on the following description.

In this regard, FIG. 6A is a view of a structure in which an upper cover of an imaging device is formed in a flat shape. In another example, FIG. 6B is a view of a structure in which the upper cover of the imaging device is formed in a curved shape.

Referring to FIG. 6A, a vehicle imaging device 1000 may be implemented inside a windshield 1001 of the vehicle. The vehicle imaging device 1000 may include a picture generation unit (PGU) 1100 and a cover 1200. The vehicle imaging device 1000 may further include a light trap portion 1250. The vehicle imaging device 1000 may further include a screen panel and/or at least one mirror so that optical signals generated in the PGU 1100 are reflected and pass through the cover 1200. The cover 1200 may be formed in a flat structure on an upper surface of a dashboard 1001, thereby reducing the volume of an overall structure of the vehicle imaging device 1000.

The sun may exist in a range between a first position P1 of low altitude and a second position P2 of high altitude. Sunlight at the first location P1 may pass through the windshield 1001 and may be reflected by the cover 1200 formed on the upper surface of the dashboard and the windshield 1001. The sunlight at the first position P1, reflected from the cover 1200 and the windshield 1001, may proceed toward a lower region of an eye box, which is a range of the user's field of view. Accordingly, sunlight at the first position P1 of the low altitude may be avoided, thereby ensuring driving stability and/or improving the clarity of content images.

Sunlight at the second location P2 may pass through the windshield 1001 and may be multi-reflected by the cover 1200 formed on the upper surface of the dashboard and the windshield 1001. The sunlight at the second location P2, multi-reflected from the cover 1200 and windshield 1001, may proceed toward the light trap portion 1250. Accordingly, the sunlight at the second position P1 of the high altitude can also be avoided, thereby ensuring driving stability and/or improving the clarity of content images.

Referring to FIG. 6B, a vehicle imaging device 1000b may be implemented inside the windshield 1001 of the vehicle. The vehicle imaging device 1000b may include a picture generation unit (PGU) 1100 and a cover 1200b. The vehicle imaging device 1000b may further include a light trap portion 1250b. The cover 1200b may be formed in a curved structure on the upper surface of the dashboard 1001, thereby increasing the volume of an overall structure of the vehicle imaging device 1000b.

The sun may exist in a range between a first position P1 of low altitude and a second position P2 of high altitude. Sunlight at the first location P1 may pass through the windshield 1001 and may be reflected by the cover 1200b formed on the upper surface of the dashboard and the windshield 1001. The sunlight at the first position P1, reflected from the cover 1200 and the windshield 1001, may proceed toward a lower region of an eye box, which is a range of the user's field of view. Accordingly, sunlight at the first position P1 of the low altitude may be avoided, thereby ensuring driving stability and/or improving the clarity of content images.

Sunlight at the second location P2 may pass through the windshield 1001 and may be multi-reflected by the cover 1200 formed on the upper surface of the dashboard and the windshield 1001. The sunlight at the second location P2, multi-reflected from the cover 1200b and windshield 1001, may proceed toward the light trap portion 1250b. Accordingly, the sunlight at the second position P1 of the high altitude can also be avoided, thereby ensuring driving stability and/or improving the clarity of content images.

Referring to FIGS. 6A and 6B, the structures of vehicle imaging devices 1000 and 1000b will be described. As the cover 1200b is formed in the curved structure, a height hc2 of the vehicle imaging device 1000b may increase compared to a height hc1 of the vehicle imaging device 1000b in which the cover 1200 is formed in the flat structure. The cover 1200 may be formed to have a flat first structure S1 in a plane shape. In another example, the cover 1200b may be formed to have a second structure S2 in a curved shape. In some embodiments, a height ht1 of the light trap portion 1250 of the first structure S1 may be formed lower than the height ht2 of the second light trap portion 1250b of the second structure S2.

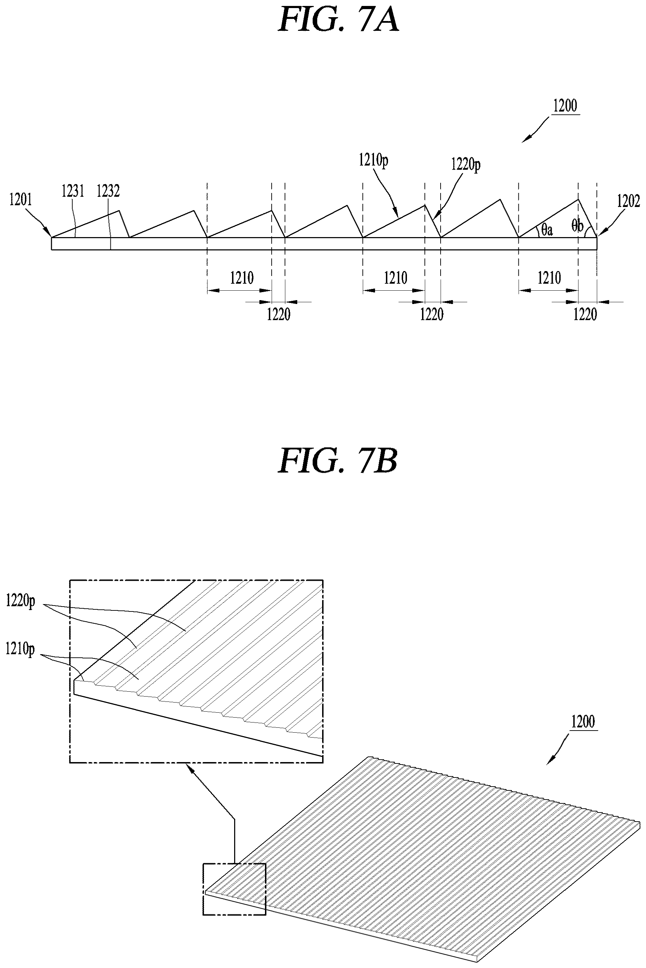

FIG. 7A is a cross-sectional view of a structure in which a plurality of patterns are formed on the cover of the imaging device of FIG. 6A. FIG. 7B is a perspective view of the cover with the plurality of patterns of FIG. 7A with an enlarged view of a partial region.

Hereinafter, a vehicle imaging device having a sunlight avoidance structure will be described with reference to FIGS. 6A and 7B. The vehicle imaging device 1000 may include a picture generation unit (PGU) 1100 and a cover 1200. The vehicle imaging device 1000 may further include a light trap portion 1250.

The PGU 1100 may be arranged in an inner region of the dashboard of the vehicle. The cover 1200 may be arranged in an upper region of the PGU 1100. The cover 1200 may have a plurality of patterns 1210p and 1220p formed on an inner surface thereof to adjust the angle of reflection of sunlight passing through the windshield. A base region of the cover 1200 and the plurality of patterns 1210p and 1220p formed in the base region may be made of the same material or different materials. The permittivity of the plurality of patterns 1210p and 1220p may have a different value from the permittivity of the base region.

The patterns 1210p and 1220p may include a first region 1210 with a surface formed at an inclined angle so that sunlight is incident thereon, and a second region 1220 between adjacent first regions 1210. Sunlight may be reflected from the first region 1210 to proceed to outside of a field of view of a driver seat occupant of the vehicle. In another example, sunlight reflected from the first region 1210 may be absorbed by the light trap portion 1250 arranged between the cover 1200 and the windshield.

A first surface of the first region 1210 may be implemented as an optical effective surface on which sunlight is incident and through which light generated in the PGU 1100 passes. A second surface of the second region 1210 may be implemented as an optical non-effective surface on which sunlight and other light are not incident. The patterns 1210p formed in the first regions 1210 may reflect sunlight incident thereon and allow optical signals generated in the PGU 1100 to pass therethrough.

The plurality of patterns 1210p and 1220p of the cover 1200 may be manufactured by plastic injection, compression molding, or imprinting on a substrate. The plurality of patterns 1210p and 1220p may be formed as micro patterns, in which angles of the effective surfaces and the non-effective surfaces continuously change, on one surface, for example, the upper surface of the cover 1200.

The angle of the effective surface and the angle of the non-effective surface, which change with continuity, may be optimized to effectively achieve optical performance and avoidance of sunlight reflection. In relation to this, a first length L1 of the first region 1210, in which sunlight is reflected, in one axial direction may be longer than a second length L2 of the second region 1220 in the one axial direction. An area of the first surface corresponding to the optical effective surface may be wider than an area of the second surface corresponding to the optical non-effective surface.

An inclination angle θb of the second region 1220 may be formed to be greater than an inclination angle θa of the first region 1210. The inclination angle θb of the second region 1220 may be formed parallel to light to correspond to an angle at which corresponding light generated in the PGU 1100 passes through the first region 1210. The inclination angle θb of the second region 1220 may be set to a value which is the same as the angle at which light passes through the first region 1210 or in a certain range with the angle.

Accordingly, the inclination angle θb of the second region 1220, which is the optical non-effective surface, may be designed as an angle of main rays of the PGU 1100, thereby avoiding sunlight while suppressing deterioration of the optical performance of the PGU 1100 itself. In another example, the inclination angle θa of the first region 1210, which is the optical effective surface, may be formed smaller than the inclination angle θb of the second region 1220 to avoid reflection by sunlight.

The inclination angle θa of the first region 1210 of the cover 1200 may be set differently depending on positions where the patterns 1210p are formed. The inclination angle θb of the second region 1220 of the cover 1200 may also be set differently depending on positions where the patterns 1220p are formed. In this regard, the inclination angle θa of the first region 1210 of the cover 1200 may increase more at another end 1202 than at one end 1201. The inclination angle θb of the second region 1220 of the cover 1200 may increase more at the other end 1202 than at the one end 1201.

The cover 1200 may include an inner surface 1231 corresponding to a rear surface and an outer surface 1232 corresponding to a front surface. The inner surface 1231 of the cover 1200 may have a flat structure in a plane shape. The outer surface 1232 of the cover 1200 may be configured to avoid sunlight while suppressing the degradation of the optical performance of the PGU 1100 itself. To this end, the plurality of patterns 1210p and 1220p may be formed in one axial direction on the outer surface 1232 of the cover 1200.

In another embodiment, the plurality of patterns 1210p and 1220p may be formed in the one axial direction on the inner surface 1231 of the cover 1200. In still another embodiment, the plurality of patterns 1210p and 1220p may be formed in the one axial direction on the inner surface 1231 and the outer surface 1322 of the cover 1200. Accordingly, the plurality of patterns 1210p and 1220p may be formed in the one axial direction on at least one of the inner surface 1231 and the outer surface 1322 of the cover 1200.

The cover 1200 may be inclined to correspond to the direction in which the windshield is formed. The cover 1200 may include one end 1201 and another end 1202. The cover 1200 may be arranged so that the one end 1202 is located higher than the another end 1201. A reference angle at which the inner surface 1231 of the cover 1200 is inclined with respect to a horizontal plane may be set to a value smaller than a mean curvature of the windshield.

As described above, the vehicle imaging device 1000 may further include the light trap portion 1250. The light trap portion 1250 may be arranged between the cover 1200 and an inner surface of the windshield. The light trap portion 1250 may be configured to absorb sunlight reflected from the first region 1210 of the cover 1200. The light trap portion 1250 may be coupled to the one end of the cover 1200 and the inner surface of the windshield. The light trap portion 1250 may be arranged to be more inclined with respect to the horizontal plane than the cover 1200 and the windshield. Accordingly, the light trap portion 1250 may be configured to more effectively absorb sunlight reflected from the cover 1200 at various angles.

Referring to FIGS. 6A to 7B, the inner surface 1202 of the cover 1200 may have a flat first structure S1 in a shape of a plane or a curved second structure S2.

The height hc1 of the PGU 1100 of the first structure S1 may be formed lower than the height hc2 of the second PGU 1100b of the second structure S2. The height ht1 of the light trap portion 1250 of the first structure S1 may be formed lower than the height ht2 of the second light trap portion 1250b of the second structure S2.

Therefore, the vehicle imaging device having the sunlight-avoidance structure according to the specification can solve the problem of an increase in volume due to the curvature of the upper cover for sunlight avoidance in a large-screen HUD, such as a hover display. To this end, the cover 1200 in an upper region may be made flat, but micro-patterns may be formed to adjust the angle of reflection of sunlight. Accordingly, the cover 1200 with the flat structure can be implemented in the shape of the plane while avoiding sunlight in the same way as a curved cover, thereby reducing the volume occupied by the vehicle imaging device.

In some embodiments, a vehicle imaging device having a sunlight-avoidance structure according to the specification may be implemented on a dashboard of a driver seat of a vehicle and/or on a dashboard of a passenger seat of the vehicle.

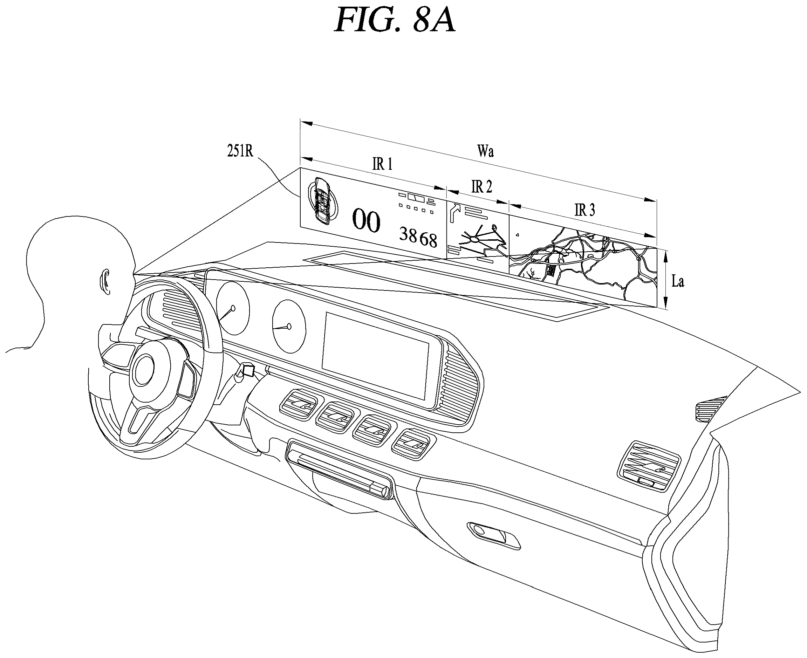

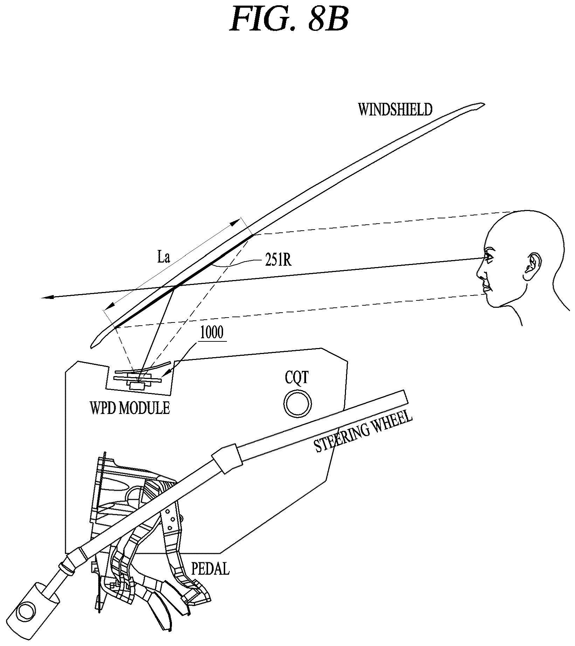

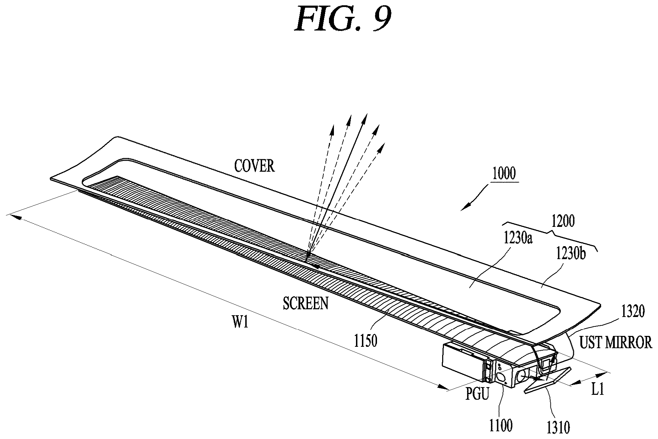

In regard to a structure implemented on the dashboard of the driver seat of the vehicle, FIG. 8A shows a configuration in which a screen of a certain ratio is formed in a specific region of front glass of the vehicle. FIG. 8B is a view of a structure in which the vehicle imaging device for implementing the screen of the certain ratio of FIG. 8A is arranged inside the dashboard of the vehicle. In another example, FIG. 9 is a view of a structure in which a PGU and internal components of the vehicle imaging device of FIG. 8B are arranged inside a cover.

Referring to FIG. 8A, an image having a width Wa in one axial direction and a length La in another axial direction may be displayed in a specific region 251R of a windshield of the vehicle. The image may be configured to include a plurality of image regions displaying information necessary for driving the vehicle. The plurality of image regions may include a first image region IR1 to a third image region IR3. A first image including vehicle-related information may be displayed in the first image region IR1 closest to a driver's field of view (FOV) range in the vehicle. A second image associated with a vehicle driving path may be displayed in the second image region IR2. A third image associated with a map including an origin and a destination may be displayed in the third image region IR3. As the plurality of images are displayed in the specific region 251R, the width Wa in the one axial direction may be set to be longer than the length La in the another axial direction by a certain ratio, for example, at least 5 times.

Referring to FIGS. 8A and 8B, a vehicle imaging device 1000 may be arranged inside the dashboard of the vehicle. The vehicle imaging device 1000 may be arranged in a specific region inside the dashboard not to overlap a region where a steering wheel and pedals are arranged. An image by light, which is reflected from a screen panel 1150 constituting the vehicle imaging device 1000, may be displayed in the specific region 251R of the windshield of the vehicle. The specific region 251R may be implemented with a certain length La so that the image is displayed in the driver's FOV range.

Referring to FIGS. 8A to 9, the vehicle imaging device 1000 may be configured to include a cover 1200, a picture generation unit (PGU) 1100, a screen panel 1150, and a mirror 1300. The mirror 1300 may be implemented as a second mirror 1320 having a curved shape. In another example, the mirror 1300 may be configured to include only one of a first mirror 1310a and a second mirror 1320a.

As another example, the mirror 1300 may be configured to include a first mirror 1310 and a second mirror 1320. The cover 1200 may form the appearance of the dashboard of the vehicle. The PGU 1100, the screen panel 1150, the first mirror 1310, and the second mirror 1320 may be arranged inside the cover 1200.

The cover 1200 of the vehicle imaging device 1000 according to the specification may include a transmission region (or transparent region) through which optical signals including images are transmitted, and a non-transmission region (or opaque region) in which internal components are arranged. The cover 1200 may include an opaque region 1230a and a transparent region 1230b.

The transparent region 1230b may be configured to output an optical signal generated from the PGU 1100 and reflect sunlight. Accordingly, the plurality of patterns 1210p and 1220p of FIG. 7A can be formed in the transparent region 1230b. Sunlight may be reflected in the first regions 1210 where the patterns 1210p are formed. The opaque region 1230a may also be configured to reflect sunlight. Accordingly, the plurality of patterns 1210p and 1220p of FIG. 7A can also be formed in the opaque region 1230a. Sunlight may be reflected in the first regions 1210 where the patterns 1210p are formed.

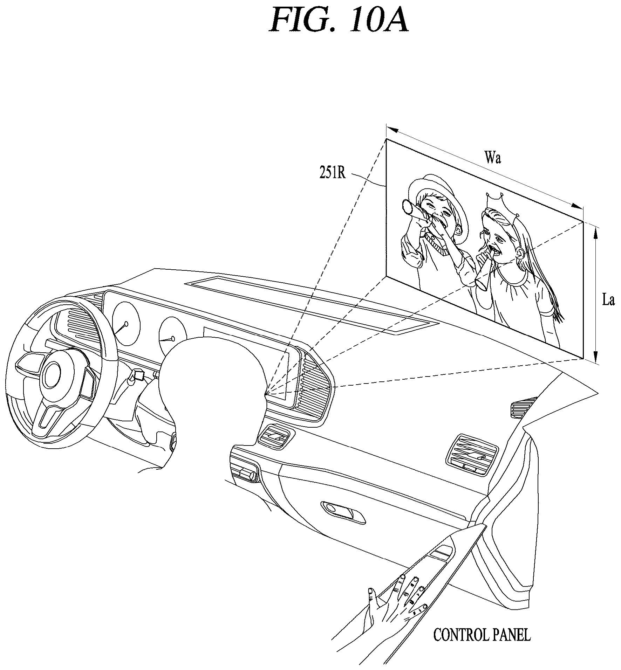

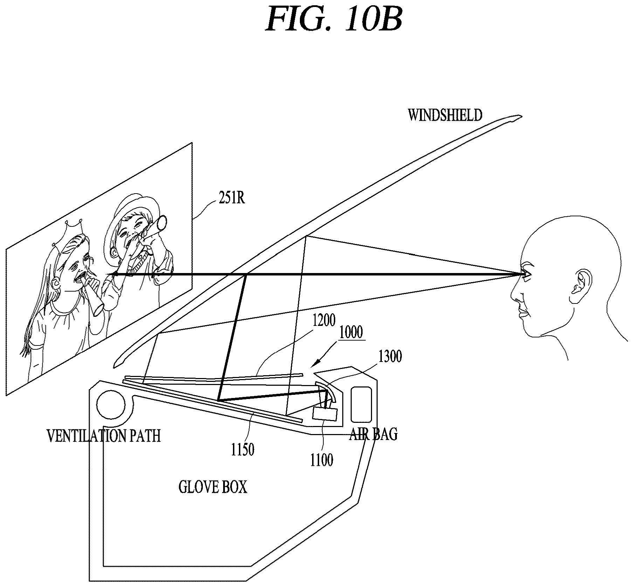

In regard to the structure implemented on the dashboard of the passenger seat of the vehicle, FIG. 10A shows a configuration in which a screen of a certain ratio is formed in a specific region of front glass of the vehicle. FIG. 10B is a view of a structure in which a vehicle imaging device for implementing the screen of the certain ratio of FIG. 10A is arranged inside the dashboard of the vehicle.

Referring to FIG. 10A, an image having a width Wa in one axial direction and a length La in another axial direction may be displayed in a specific region 251R of a windshield of a vehicle. The image may be displayed in the specific region of the windshield on the passenger seat side in the vehicle. The image displayed in the specific region of the windshield on the passenger seat side may be displayed such that the width Wa in the one axial direction is larger than the length La in the another axial direction.

Referring to FIGS. 10A and 10B, a vehicle imaging device 1000 according to the specification may be implemented as a personalized infotainment display (PID) for a user seated in the passenger seat of the vehicle. The PID may be implemented to have a large screen of at least a predetermined width or length for the passenger seat. The PID may provide entertainment content, such as movies/sports/music, and Internet browsing functions. The PID may provide driving assistance functions, such as navigation and the like. The PID may provide document browsing & editing and mobile connecting functions.

The vehicle imaging device 1000 may be configured to include a cover 1200, a picture generation unit (PGU) 1100, a screen panel 1150, and a mirror 1300. The vehicle video device 1000 may be placed in an inner region of the vehicle, avoiding internal structures of the vehicle, such as a glove box, an air conditioner, and an airbag.

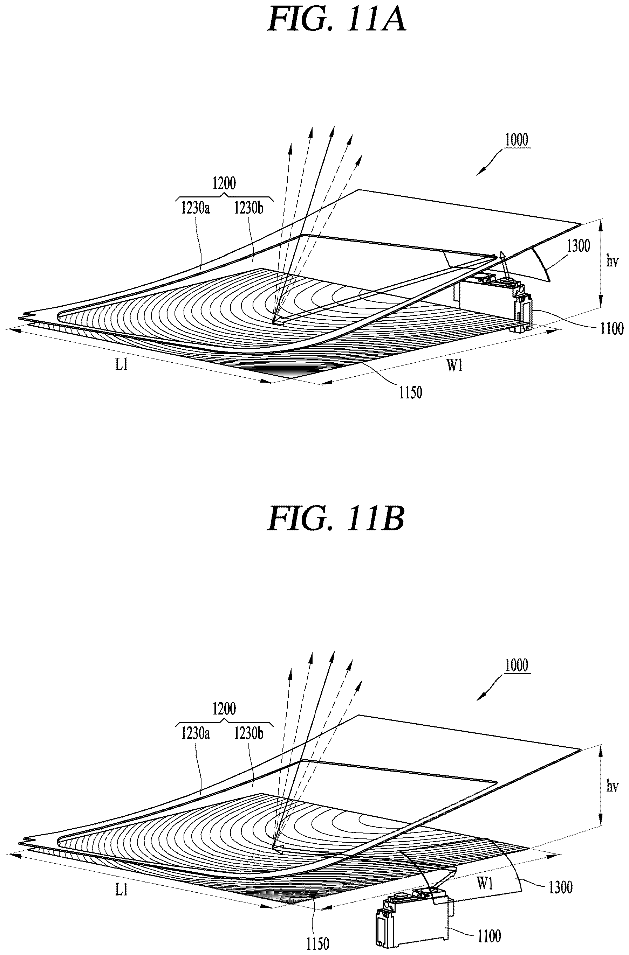

In some embodiments, FIGS. 11A and 11B are views of a structure in which a picture generation unit and internal components of the vehicle imaging device of FIG. 10B are arranged inside a cover.

Referring to FIG. 11A, the PGU 1100 arranged in the one axial direction may be implemented as a front surface structure. The PGU 1100 may be positioned spaced apart from one end or another end of the screen panel 1150. Light emitted from the PGU 1100 may be reflected from the mirror 1300 above the PGU 1100 and the screen panel 1150.

The cover 1200 may form the appearance of the dashboard of the vehicle and may be arranged on the passenger seat of the vehicle. The PGU 1100 may be arranged inside the dashboard. The PGU 1100 may be configured to emit light upward or to one side so that an image is displayed in a specific region within the field of view of a user seated in the passenger seat.

The mirror 1300 may be arranged between the PGU and the cover. The mirror 1300 may be configured to reflect light, which is generated (emitted) upward or to the one side by the PGU 1100. Light reflected from the mirror 1300 may be reflected from the screen panel 1150 so that the image may be displayed in the specific region 251R of the windshield of the vehicle. The mirror 1300 may be, but is not limited to, a single-focus mirror.

The screen panel 1150 may be arranged between the PGU 1100 and the mirror 1300. The screen panel 1150 may reflect light, reflected from the mirror 1300, so that an image by the reflected light passes through the cover 1200. The screen panel 1150 and the mirror 1300 may be designed so that the image generated in the PGU 1100 can be projected on the screen panel 1150 through the mirror 1300 even at a short projection distance less than a certain distance. The image projected at the short projection distance may be reflected from the screen panel 1150, which is designed with angle orientation, to be visible only to the passenger in the passenger seat.

The image by the light reflected from the screen panel 1150 may be displayed in the specific region 251R of the windshield on the passenger seat side. The image displayed in the specific region 251R of the windshield on the passenger seat side may be displayed such that the width Wa in the one axial direction is larger than the length La in the another axial direction. One end of the image displayed in the specific region 251R of the windshield on the passenger seat side may be set to be out of the driver's field of view.

A special screen panel and single-focus mirror designed to be thin and small in volume may be applied to the vehicle imaging device 1000 to avoid internal vehicle structures, such as the glove box, the air conditioner, and the airbag. A control panel may be arranged on a right armrest of the passenger seat to facilitate the passenger in the passenger seat to manipulate the vehicle imaging device 1000. Display of an image and reproduction of content in the specific region 251R of the windshield on the passenger seat side may be performed through the control panel arranged on the passenger seat.

The width Wa and length La of the image displayed in the specific region 251R of the windshield on the passenger seat side may be associated with first width W1 and length L1 of the screen panel 1150. In this regard, the screen panel 1150 may be formed inside the dashboard to have the first width W1 in the one axial direction and the first length L1 in the another axial direction. A ratio of the first width W1 and the first length L1 of the screen panel 1150 may be set as a first ratio. A ratio of the width Wa and the length La of the image displayed on the windshield may be set as a second ratio.

A top of the image displayed on the windshield of the passenger seat may be positioned lower than a center line of the windshield. The first ratio of the first width W1 to the first length L1 of the screen panel 1150 may be set to at least 5:1. Accordingly, the second ratio of the width Wa to the length La of the image displayed on the windshield may also be set to at least 5:1.

In some embodiments, the cover 1200 of the vehicle imaging device 1000 according to the specification may include a transmission region (or transparent region) through which optical signals including images are transmitted, and a non-transmission region (or opaque region) in which internal components are arranged. The cover 1200 may include an opaque region 1230a and a transparent region 1230b.

The transparent region 1230b may be configured to output an optical signal generated from the PGU 1100 and reflect sunlight. Accordingly, the plurality of patterns 1210p and 1220p of FIG. 7A can be formed in the transparent region 1230b. Sunlight may be reflected in the first regions 1210 where the patterns 1210p are formed. The opaque region 1230a may also be configured to reflect sunlight. Accordingly, the plurality of patterns 1210p and 1220p of FIG. 7A can also be formed in the opaque area 1230a. Sunlight may be reflected in the first regions 1210 where the patterns 1210p are formed.

Referring to FIGS. 10A to 11B, the opaque region 1230a may be formed in one side region and/or another side region corresponding to regions where the PGU 1100 and the mirror 1300 are arranged. The transparent region 1230b may be formed to correspond to a region where the screen panel 1150 is arranged. The opaque region 1230a may be formed to surround the transparent region 1230b. An image formed by reflection from the screen panel 1150 may pass through the transparent region 1230b of the cover 1200 to be displayed in the specific region 251R of the windshield in a passenger seat.

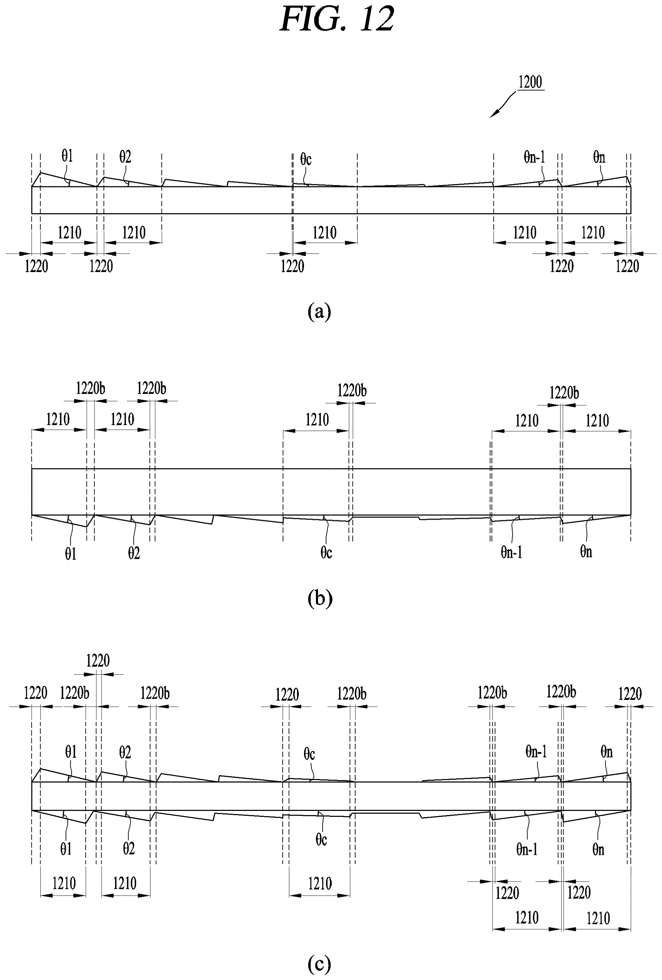

Each pattern of the vehicle imaging device according to the specification, particularly, the sunlight-avoidance structure of the vehicle imaging device, may be formed at a different inclination angle. In this regard, FIG. 12 is a view of a structure in which patterns are formed at different inclination angles on one surface of a cover according to an embodiment.

Referring to FIGS. 7A and 7B and (a) of FIG. 12, micro-patterns may be formed on the outer surface 1231, which is the front surface of the cover 1200. The micro-patterns of the cover 1200 may include first regions 1210 where sunlight is reflected and second regions 1220 between the adjacent first regions 1210.

Referring to (b) of FIG. 12, micro-patterns may be formed on the inner surface 1232, which is the rear surface of the cover 1200. The micro-patterns of the cover 1200 may include first regions 1210 where sunlight is reflected and second regions 1220b between the adjacent first regions 1210. Referring to (a) and (b) of FIG. 12, micro-patterns may be formed on a single surface of the front and rear surfaces of the cover 1200.

Referring to (c) of FIG. 12, micro-patterns may be formed on both the outer surface 1231, which is the front surface of the cover 1200, and the inner surface 1232, which is the rear surface. Therefore, micro-patterns can be formed on both surfaces of the front and rear surfaces of the cover 1200. The micro-patterns of the cover 1200 may include first regions 1210 where sunlight is reflected and second regions 1220, 1220b between the adjacent first regions 1210. The second region 1220 may be formed with an inclination angle in an upward direction, and the second region 1220b may be formed with an inclination angle in an opposite downward direction.

Referring to FIGS. 7A, 7B, and 12, the plurality of patterns 1210p and 1220p may be formed in the one axial direction on at least one of the outer surface 1231 and the inner surface 1232 of the cover 1200. The first region 1210 of the cover 1200 may be formed so that the inclination angles change from positive angles to negative angles. In the first region 1210 where the inclination angles are formed as positive angles, the patterns 1210p may be formed in a clockwise direction with respect to the horizontal plane. In the first region 1210 where the inclination angles are formed as negative angles, the patterns 1210p may be formed in a counterclockwise direction with respect to the horizontal plane.

In another embodiment, the plurality of patterns 1210p and 1220p may be formed in the one axial direction on the inner surface 1231 of the cover 1200. In another embodiment, the plurality of patterns 1210p and 1220p may be formed in the one axial direction on the inner surface 1231 and the outer surface 1322 of the cover 1200. Accordingly, the plurality of patterns 1210p and 1220p may be formed in the one axial direction on at least one of the inner surface 1231 and the outer surface 1322 of the cover 1200.

The first region 1210 of the cover 1200 may correspond to the effective surfaces of the micro-patterns of the cover 1200. The first region 1210 of the cover 1200 may be designed at an angle for avoiding sunlight reflection. Accordingly, the angle of the effective surface of the micro-pattern for each region of the cover 1200 can be designed to correspond to various elevation angles and azimuth angles of sunlight.

The micro-patterns of the cover 1200 may be designed considering that sunlight is steered from the front or rear based on a vehicle occupant. The angle of the effective surface may be designed so that sunlight reflected by the micro-pattern of the cover 1200 is absorbed by the light trap portion 1250 or proceeds toward a region outside the eye box, which is a region of the vehicle occupant's field of view. Therefore, the angle of the effective surface of the micro-pattern can be designed to correspond to two directions (forward and backward) in which sunlight shines.

For example, the first regions 1210 of the cover 1200 may be formed such that inclination angles θ1, θ2, ..., θc, ..., θn change from positive angles to negative angles. The first regions 1210 may be formed with inclination angles which change from a first angle θ1 and a second angle θ2 to an n-1-th angle θn-1 and an n-th angle θn. The size of the second angle θ2 may be smaller than the size of the first angle θ1. The size of the n-th angle θn may be formed to be greater than the size of the n-1-th angle θn-1. The inclination angle of the second region 1220 of the cover 1200 may be formed greater than the inclination angle of the first region 1210 of the cover 1200.

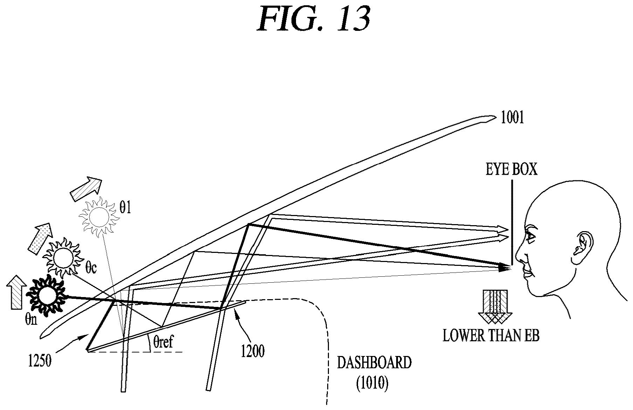

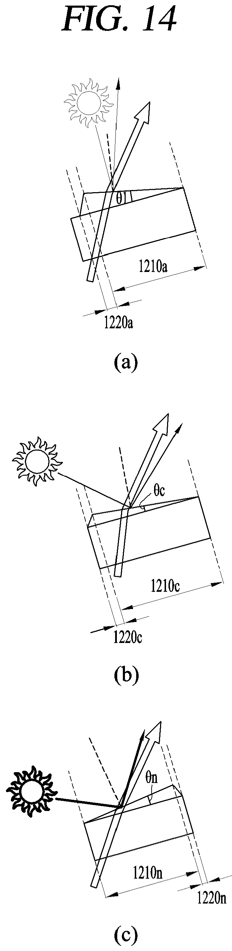

In some embodiments, a vehicle imaging device having a sunlight-avoidance structure according to the specification may be configured to suppress backward sunlight or forward sunlight from being steered into the user's eye box region. In this regard, FIG. 13 is a view of a structure for avoiding backward sunlight. FIG. 14 is an enlarged view of a structure in which backward sunlight is incident on and reflected from each pattern of an upper cover.

Referring to FIGS. 12 to 14, when sunlight is steered to a rear region which is opposite to the direction of travel of the vehicle, sunlight may be reflected in the first region 1210 of the cover 1200 and may proceed to a lower region of the occupant's eye box. Sunlight which has passed through the windshield may be reflected by the first region 1210 of the cover 1200 and the inner surface of the windshield and may proceed toward the lower region of the occupant's eye box region. In another example, light output from the PGU 1100 may pass through the first region 1210 and may be reflected from the inner surface of the windshield to proceed toward the occupant's eye box region.

As shown in (a) of FIG. 14, sunlight incident at a first elevation angle may be incident on a first region 1210a having a first angle θ1. An incident angle of light output from the vehicle imaging device may be the same as an angle of a second region 1220a or may be a value in a certain range. As shown in (b) of FIG. 14, sunlight incident at a c-th elevation angle may be incident on a c-th region 1210c having a c-th angle θc. In this regard, the c-th elevation angle may have a smaller value than the first elevation angle, and the c-th angle θc may be set to a value smaller than the first angle θ1. An incident angle of light output from the vehicle imaging device may be the same as an angle of a second region 1220c or may be a value in a certain range. As shown in (c) of FIG. 14, sunlight incident at an n-th elevation angle may be incident on a first region 1210n having an n-th angle θn. In this regard, the n-th elevation angle may have a smaller value than the c-th elevation angle, and the n-th angle θn may be set in an opposite direction to the first angle θ1 and the c-th angle θc.

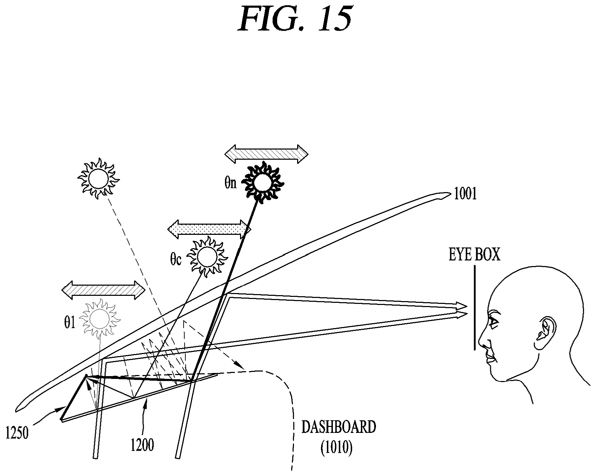

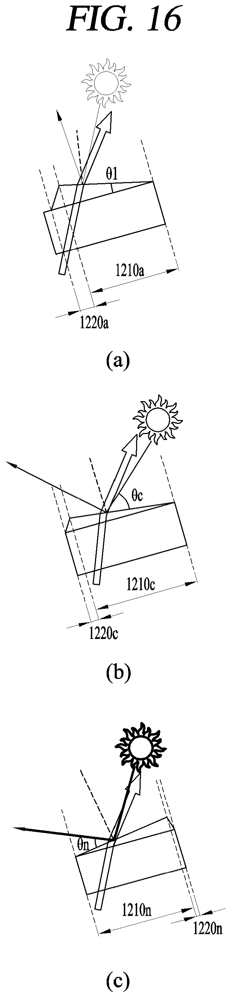

FIG. 15 is a view of a structure for avoiding forward sunlight. FIG. 16 is an enlarged view of a structure in which forward sunlight is incident on and reflected from each pattern of an upper cover.

Referring to FIGS. 12, 15, and 16, when sunlight is steered to a rear region which is the direction of travel of the vehicle, the sunlight may be reflected by the first region 1210 of the cover 1200 to be absorbed by the light trap portion 1250. Sunlight which has passed through the windshield may be reflected by the first region 1210 of the cover 1200 and the inner surface of the windshield and absorbed into the light trap portion 1250. Some of the sunlight which has passed through the windshield may pass through the windshield and be multi-reflected between the cover 1200 and the inner surface of the windshield to be absorbed into the light trap portion 1250 or proceed toward the lower region of the occupant's eye box. In another example, light output from the PGU 1100 may pass through the first region 1210 and may be reflected from the inner surface of the windshield to proceed toward the occupant's eye box region.

As shown in (a) of FIG. 16, sunlight incident at a first elevation angle may be incident on a first region 1210a having a first angle θ1. An incident angle of light output from the vehicle imaging device may be the same as an angle of a second region 1220a or may be a value in a certain range. As shown in (b) of FIG. 16, sunlight incident at a c-th elevation angle may be incident on a c-th region 1210c having a c-th angle θc. In this regard, the c-th elevation angle may have a smaller value than the first elevation angle, and the c-th angle θc may be set to a value smaller than the first angle θ1. An incident angle of light output from the vehicle imaging device may be the same as an angle of a second region 1220c or may be a value in a certain range. As shown in (c) of FIG. 16, sunlight incident at an n-th elevation angle may be incident on a first region 1210n having an n-th angle θn. In this regard, the n-th elevation angle may have a smaller value than the c-th elevation angle, and the n-th angle θn may be set in an opposite direction to the first angle θ1 and the c-th angle θc.

Referring to FIGS. 12 to 16, the light trap portion 1250 may be arranged in the front region with respect to the center of the dashboard. Therefore, the light trap portion 1250 may be referred to as a front light trap portion. A backward sunlight structure may be formed where the sun is located in front of the vehicle and shines backwards opposite to the direction of travel of the vehicle. Sunlight which has passed through the front glass of the vehicle may avoid the light trap portion 1250 to be reflected from the micro-patterns of the cover 1250. The effective surface angle of the micro-pattern may be designed so that reflected sunlight proceeds toward the outer region (mainly downwards) of the vehicle occupant's eye box.

A forward sun light structure may be formed where the sun is located at the rear of the vehicle and shines in the direction of travel of the vehicle. When sunlight which has passed through the front glass of the vehicle is reflected by the micro-pattern, the angle of the effective surface of the micro-pattern may be designed so that the reflected sunlight proceeds toward the light trap portion 1205 and absorbed into the light trap portion.

The angles of the effective surfaces, which change continuously, may be formed to reverse from a positive (+) angle to a negative (-) angle depending on an inclination angle θref of the cover 1200.

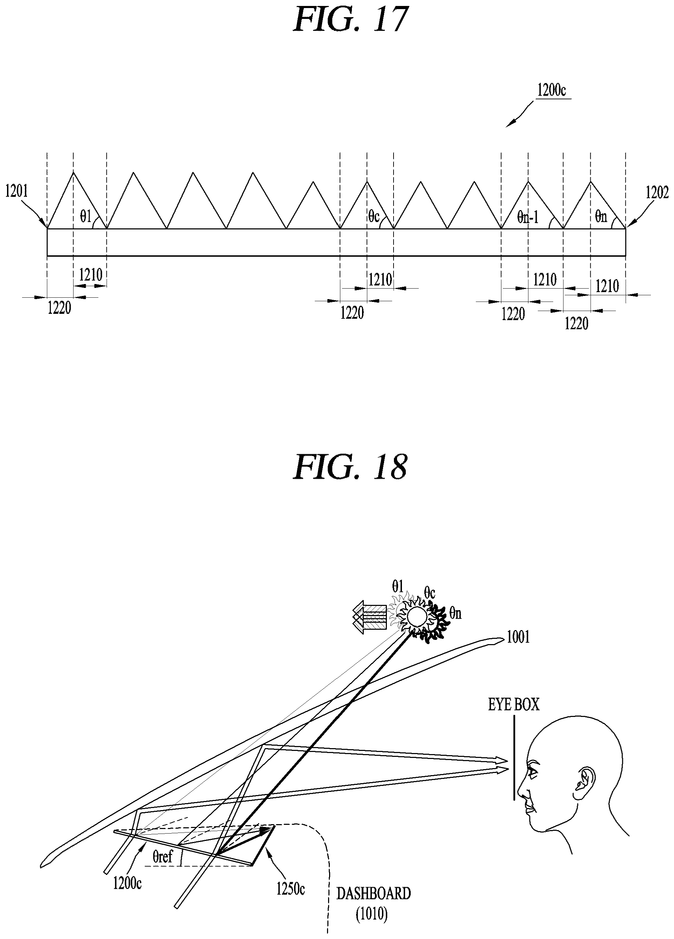

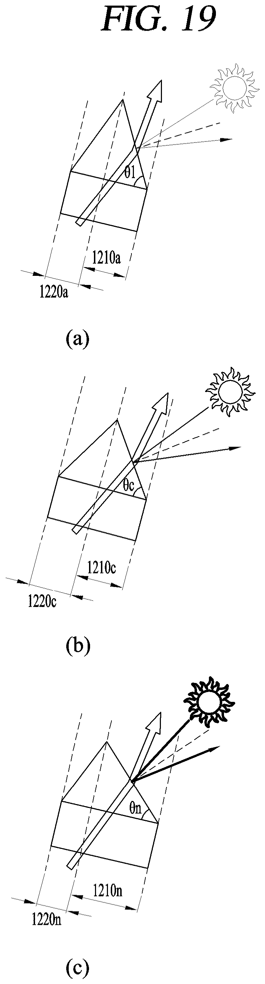

The cover 1200 may be formed by being inclined in the same direction as a direction in which the windshield is formed. In another embodiment, the cover may be formed by being inclined in an opposite direction to the direction in which the windshield is formed. In this regard, FIG. 17 is a view of a vehicle imaging device having a sunlight-avoidance structure in which a cover is inclined in an opposite direction to a direction in which a windshield is formed. FIG. 18 is a view of a structure of a cover in which an optical effective surface is formed by patterns having different angles. FIG. 19 is a view of a structure in which sunlight is incident and reflected at different locations in the structures of FIGS. 17 and 18.

Referring to FIGS. 17 to 19, a cover 1200c may be formed by being inclined in the opposite direction to the direction in which the windshield is formed. The cover 1200c may have one end 1201 and another end 1202. The cover 1200c may be arranged so that the another end 1202 is located lower than the one end 1201. The light trap portion 1250c may be coupled to the another end 1202 of the cover 1200c and the inner surface of the dashboard. The light trap portion 1250c may be arranged to be more inclined with respect to a horizontal plane than the cover 1200c and the windshield. Accordingly, sunlight steered at at least a specific height, which is an upper region of the windshield, can be reflected from the cover 1200c and absorbed into the light trap portion 1250c. When sunlight is steered to an upper region, which has a height of at least a threshold, on the windshield, the sunlight can be reflected by the first region 1210 of the cover 1200c and absorbed into the light trap portion 1250c.

The first regions 1210 of the cover 1200c may be formed so that inclination angles θ1, θ2, ..., θc, ..., θn gradually decrease. The first regions 1210 may be formed with inclination angles which change from a first angle θ1 and a second angle θ2 to an n-1-th angle θn-1 and an n-th angle θn. The size of the second angle θ2 may be smaller than the size of the first angle θ1. The size of the n-th angle θn may be formed to be smaller than the size of the n-1-th angle θn-1. In another example, the inclination angles of the second regions 1220 may each be formed parallel to light to correspond to an angle of the light generated in the PGU 1100.

As shown in (a) of FIG. 19, sunlight incident at a first elevation angle may be incident on a first region 1210a having a first angle θ1. An incident angle of light output from the vehicle imaging device may be the same as an angle of a second region 1220a or may be a value in a certain range. As shown in (b) of FIG. 19, sunlight incident at a c-th elevation angle may be incident on a c-th region 1210c having a c-th angle θc. In this regard, the c-th elevation angle may have a smaller value than the first elevation angle, and the c-th angle θc may be set to a value smaller than the first angle θ1. An incident angle of light output from the vehicle imaging device may be the same as an angle of a second region 1220c or may be a value in a certain range. As shown in (c) of FIG. 19, sunlight incident at an n-th elevation angle may be incident on a first region 1210n having an n-th angle θn. In this regard, an incident angle of light output from the vehicle imaging device may be the same as an angle of a second region 1220n or may be a value in a certain range.

Therefore, the sunlight-avoidance structure can be applied to both the backward sunlight structure, in which the sun is located in front of the vehicle and shines backwards opposite to the direction of travel of the vehicle, and the forward sunlight structure, in which the sun is located at the rear of the vehicle and shines in the direction of travel of the vehicle. In these two cases, the angles of the effective surfaces of the micro-patterns may be designed to reflect sunlight, which has passed through the front glass of the vehicle, so as to proceed toward the light trap portion 1250c and absorbed into the light trap portion 1250c. The angle of the non-effective surface of the cover may be designed to be parallel to an angle of main rays, such that each main ray of the designed imaging device does not fall on the non-effective surface of the micro-pattern. The angles of the effective and non-effective surfaces from a first pattern to an n-th pattern of the cover 1200c may continuously change.

In some embodiments, a vehicle imaging device having a sunlight-avoidance structure according to the specification may be arranged inside a dashboard. A vehicle imaging device in which light is reflected from a windshield to create images may be implemented as a head up display (HUD), a virtual image display (VID), and a wide panel display (WPD). In such a vehicle imaging device, sunlight incoming through the front glass of a vehicle may be reflected from an image outlet on an upper surface of a dashboard, and thereby cause glare to a driver, which may threaten safety or reduce image quality.

The image outlet on the upper surface of the dashboard may be implemented as an upper cover of the dashboard. The upper cover of the dashboard may also be referred to as a dust cover, because it suppress dust from entering the interior of the dashboard. When designing the structure of the upper cover of the dashboard, the shape of the upper cover may be designed so that even if sunlight is reflected, the sunlight is absorbed into the light trap portion or is suppressed from entering an eye box range, which is the driver's gaze range. This may increase the volume of the vehicle imaging device, thereby limiting the installation of the vehicle imaging device inside the vehicle. It is expected that this specification can minimize the volume of the device itself and overcome limitations in implementing structures by minimizing the curvature of the upper cover or making the upper cover flat.

So far, the vehicle imaging device having the sunlight-avoidance structure according to this specification has been described. The technical effects of the vehicle imaging device having the sunlight-avoidance structure according to the specification will be summarized as follows, but are not limited thereto.

The shape of an upper cover where an image of the imaging device is output can be designed to have a curvature such that reflected sunlight avoids a path directed toward the human eyes to suppress glare to a driver due to sunlight reflection. According to this specification, the problem of an increase in volume of the imaging device due to the curvature of the upper cover can be solved.

According to the specification, the vehicle imaging device for the purpose of sunlight avoidance can be implemented as the upper cover of a dashboard of a vehicle, thereby reducing the volume of an overall structure.

According to the specification, sunlight can be avoided by applying micro-patterns rather than curvature to the upper cover, and the upper cover can be maintained in a flat shape so as to reduce the volume of the imaging device.

According to the specification, a phase range in which sunlight can be received can be reduced by the upper cover with the reduced volume, which can also implement a light trap portion with a small size.

According to the specification, the degree of freedom in the design of the vehicle imaging device can be secured by optimizing the arrangement structure and shapes of the upper cover and the light trap portion, taking into consideration a direction of movement of the sun and a direction of travel of the vehicle.

The effects of the disclosure are not limited to those effects mentioned above, and other effects not mentioned may be clearly understood by those skilled in the art from the description of the appended claims.

The disclosure may be implemented as computer-readable codes in a program-recorded medium. The computer-readable medium may include all types of recording devices each storing data readable by a computer system. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like. Also, the computer may include a processor or a controller. Accordingly, the detailed description thereof should not be construed as restrictive in all aspects but considered as illustrative. The scope of the disclosure should be determined by reasonable interpretation of the appended claims and all changes that come within the equivalent scope of the disclosure are included in the scope of the disclosure.

## Claims

1. A vehicle imaging device comprising:
a picture generation unit (PGU) arranged in an inner region of a dashboard of a vehicle; and
a cover arranged in an upper region of the PGU and comprising a plurality of patterns formed on an inner surface thereof to adjust an angle of reflection of sunlight passing through a windshield,
wherein the plurality of patterns comprise first regions each having a surface formed at an inclined angle so that sunlight is incident thereon, and second regions each between adjacent first regions, and
the sunlight is reflected in the first region to proceed toward outside of an eye box region of a driver seat occupant or to be absorbed into a light trap portion arranged between the cover and the windshield.

2. The vehicle imaging device of claim 1, wherein
a first surface of the corresponding first region is implemented as an optical effective surface on which the sunlight is incident and through which light generated in the PGU passes, and
a second surface of the corresponding second region is implemented as an optical non-effective surface on which the sunlight and the light are not incident.

3. The vehicle imaging device of claim 2, wherein
a first length of the first region, in which the sunlight is reflected, in one axial direction is formed longer than a second length of the second region in the one axial direction, and
an area of the first surface corresponding to the optical effective surface is formed wider than an area of the second surface corresponding to the optical non-effective surface.

4. The vehicle imaging device of claim 1, wherein
a first length of the first region, in which the sunlight is reflected, in one axial direction is formed longer than a second length of the second region in the one axial direction, and
an inclination angle of the second region is formed greater than an inclination angle of the first region.

5. The vehicle imaging device of claim 1, wherein
inclination angles of the second regions are each formed parallel to light generated in the PGU to correspond to an angle at which the light passes through the first region.

6. The vehicle imaging device of claim 1, wherein
the cover has the inner surface and an outer surface, and
the plurality of patterns are formed in one axial direction on at least one of the inner surface and the outer surface of the cover.

7. The vehicle imaging device of claim 6, wherein
the cover is arranged to be inclined to correspond to a direction in which the windshield is formed,
the cover is arranged so that one end thereof is located higher than another end, and
a reference angle at which the inner surface of the cover is inclined with respect to a horizontal plane is set to a value smaller than a mean curvature of the windshield.

8. The vehicle imaging device of claim 1, further comprising
a light trap portion arranged between the cover and an inner surface of the windshield and configured to absorb sunlight reflected from the first region of the cover.

9. The vehicle imaging device of claim 8, wherein
the light trap portion is coupled to one end of the cover and the inner surface of the windshield, and
arranged to be more inclined with respect to a horizontal plane than the cover and the windshield.

10. The vehicle imaging device of claim 8, wherein
the cover is formed such that the inner surface has a first structure which is flat in a shape of a plane or a second structure which is curved,
a height of the PGU of the first structure is lower than a height of a second PGU of the second structure, and
a height of the light trap portion of the first structure is lower than a height of a second light trap portion of the second structure.

11. The vehicle imaging device of claim 1, wherein
the plurality of patterns are formed in one axial direction on at least one of an inner surface and an outer surface of the cover, and
the first regions are formed such that inclination angles thereof change from positive angles to negative angles.

12. The vehicle imaging device of claim 11, wherein
the first regions are formed at a first angle and a second angle to an n-1-th angle and an n-th angle,
a size of the second angle is smaller than a size of the first angle, and
a size of the n-th angle is greater than a size of the n-1-th angle.

13. The vehicle imaging device of claim 11, wherein
when the sunlight is steered to a rear region, which is an opposite direction to a direction of travel of the vehicle, the sunlight is reflected from the first region of the cover and proceeds to a lower region of the eye box region of the driver seat occupant.

14. The vehicle imaging device of claim 11, wherein
when the sunlight is steered to a front region, which is a direction of travel of the vehicle, the sunlight is reflected from the first region of the cover and absorbed into the light trap portion.

15. The vehicle imaging device of claim 6, wherein
the cover is arranged to be inclined in an opposite direction to a direction in which the windshield is formed, and
the cover is arranged such that one end thereof is located lower than another end.

16. The vehicle imaging device of claim 15, wherein
the light trap portion is coupled to the another end of the cover and an inner surface of the dashboard, and
the light trap portion is arranged to be more inclined with respect to a horizontal plane than the cover and the windshield.

17. The vehicle imaging device of claim 16, wherein
the first regions are formed such that inclination angles thereof gradually decrease,
the first regions are formed at a first angle and a second angle to an n-1-th angle and an n-th angle,
a size of the second angle is smaller than a size of the first angle, and
a size of the n-th angle is smaller than a size of the n-1-th angle.

18. The vehicle imaging device of claim 17, wherein
inclination angles of the second regions are each formed parallel to light generated in the PGU to correspond to an angle of the light.

19. The vehicle imaging device of claim 16, wherein
when the sunlight is steered to an upper region whose height is at least a threshold on the windshield, the sunlight is reflected from the first region of the cover and absorbed into the light trap portion.

20. The vehicle imaging device of claim 1, wherein
the plurality of patterns of the cover are manufactured by plastic injection, compression molding, or imprinting on a substrate.
